# EUROPÄISCHE PATENTSCHRIFT

(11) **EP 2 974 848 B1**
(45) Veröffentlichungstag und Bekanntmachung des Hinweises auf die Patenterteilung: **25.04.2018**
(21) Anmeldenummer: 15176264.8
(22) Anmeldetag: 10.07.2015
(51) Int. Cl.: B29C 65/66, B29C 65/44, B29C 65/64, B29C 65/72, B29C 65/00, B29L 31/30, B29C 65/46, B62D 21/11, B62D 29/00

(54) **VERFAHREN ZUR HERSTELLUNG EINES AUS MINDESTENS EINER METALLISCHEN KOMPONENTE UND MINDESTENS EINER POLYMEREN KOMPONENTE ZUSAMMENGESETZTEN HYBRID-BAUTEILS UND HYBRID-BAUTEIL**
METHOD FOR MAKING A HYBRID PART MADE OF AT LEAST ONE METAL COMPONENT AND OF AT LEAST ONE POLYMER COMPONENT AND HYBRID PART
PROCEDE DE FABRICATION D'UN COMPOSANT HYBRIDE CONSTITUE D'AU MOINS UN COMPOSANT METALLIQUE ET D'AU MOINS UN COMPOSANT POLYMERE ET COMPOSANT HYBRIDE

(30) Priorität: 14.07.2014 DE 102014109829
(43) Veröffentlichungstag der Anmeldung: 20.01.2016
(73) Patentinhaber: WISCO Tailored Blanks GmbH, 47259 Duisburg (DE)
(72) Erfinder: Both, Dr. Christian, 47119 Duisburg (DE); Krasokha, Dr. Nikolaj, 40476 Düsseldorf (DE)
(74) Vertreter: Cohausz & Florack

(56) Entgegenhaltungen:
- EP-A1- 2 500 162
- JP-A- H05 245 936

## Beschreibung

Die Erfindung betrifft ein Verfahren zur Herstellung eines aus mindestens einer metallischen Komponente und mindestens einer polymeren, vorzugsweise faserverstärkten Komponente zusammengesetzten Hybrid-Bauteils, bei dem die metallische Komponente rohrförmig oder als C-Profil ausgebildet ist und einen Hohlraum zur Aufnahme eines Abschnitts der polymeren Komponente aufweist, und bei dem die metallische Komponente und die polymere Komponente unter Wärmeeinwirkung stoffschlüssig aneinandergefügt werden.

Des Weiteren betrifft die Erfindung ein durch das erfindungsmäße Verfahren hergestelltes Hybrid-Bauteil, das aus mindestens einer metallischen Komponente und mindestens einer polymeren, vorzugsweise faserverstärkten Komponente zusammengesetzt ist, wobei die metallische Komponente rohrförmig oder als C-Profil ausgebildet ist und einen Hohlraum zur Aufnahme eines Abschnitts der polymeren Komponente aufweist.

Faserverstärkte Kunststoffe, auch Faserverbundkunststoffe genannt, weisen eine hohe Festigkeit und Steifigkeit sowie eine geringe spezifische Dichte auf. Diese Eigenschaften machen Faserverbundkunststoffe für den Leichtbau, insbesondere für den Fahrzeugleichtbau besonders interessant. Diesbezüglich erscheint die Kombination aus metallischen Werkstoffen und Faserverbundkunststoffen vielversprechend.

Ein Beispiel für die Anwendung von Faserverbundkunststoffen ist der Kraftfahrzeug-Achsbereich (Chassis). In diesem Fall werden Faserverbundkunststoffrohre bei erhöhter Temperatur dreidimensional durch Biegen umgeformt und dadurch in die gewünschte Form gebracht. Anschließend erfolgt die Anbindung des umgeformten Faserverbundkunststoffteils an weitere Komponenten aus metallischen Werkstoffen der Baugruppe in einem Klebeprozess. Der Klebeprozess ist allerdings mit einem hohen technischen Aufwand verbunden und noch nicht ausreichend weit entwickelt.

Aus der DE 10 2011121 621 A1 ist ein Verfahren zur Herstellung eines aus einer Metallkomponente und aus einer Kunststoffkomponente bestehenden Hybrid-Bauteiles bekannt, bei welchem der für den stoffschlüssigen Verbund von Metall- und Kunststoffkomponente notwendige Wärmeeintrag aus der bei einem vorgelagertem Umformverfahren in der Metallkomponente verbliebenen Restwärme erfolgt. Dadurch soll die für die Verbindung der Metall- und Kunststoffkomponente zusätzlich aufzuwendende Energie eingespart werden.

Die EP 2 500 162 A1 offenbart ein Verfahren zur Herstellung eines Hybrid-Bauteils für ein Fahrzeug, bei dem ein rinnenförmiges, im Querschnitt U-förmiges Metallformteil, welches einen rinnenförmigen Aufnahmeraum definiert, und ein Kunststoffeinsatz aus thermoplastischem Material bereitgestellt werden, wobei der Kunststoffeinsatz eine Außenform aufweist, die dem rinnenförmigen Aufnahmeraum des Metallformteils angepasst ist. Das Metallteil wird vor dem Einsetzen des Kunststoffeinsatzes in den Aufnahmeraum auf eine erhöhte Temperatur erhitzt, die ausreichend ist, um das thermoplastische Material des Kunststoffeinsatzes an den Stellen zu schmelzen, an denen das Metallteil und der Kunststoffeinsatz später in Kontakt stehen. Der Kunststoffeinsatz wird dann unter Ausübung von Druck in den Aufnahmeraum des erhitzten Metallteils eingesetzt, wobei das thermoplastische Material des Einsatzes dort schmilzt, wo der Einsatz und das Metallteil in Kontakt stehen, während der Druck ausgeübt wird.

Aus der JP 05245936 A ist ein Verfahren zur Herstellung eines Hybrid-Bauteils bekannt, bei dem ein rohrförmiges Metallteil in ein rohrförmiges Kunststoffteil eingesetzt wird. Hierbei ist die lichte Weite des Kunststoffteils bei Raumtemperatur gleich dem Außenmaß des Metallbauteils. Das Kunststoffteil wird vor dem Fügeprozess in einem Ofen erwärmt und eine Alkoxysilanverbindung auf der Verbindungsfläche des Metallbauteils appliziert. Anschließend wird das Metallbauteil in das erwärmte Kunststoffteil gefügt, wodurch die beiden Bauteile durch eine Kondensationsreaktion der Alkoxysilanverbindung fest verbunden werden.

Davon ausgehend liegt der Erfindung die Aufgabe zugrunde, ein Verfahren der eingangs genannten Art zu schaffen, mit dem sich eine metallische Komponente und eine polymere Komponente zur Herstellung eines Metall-Kunststoff-Hybrid-Bauteiles zuverlässig und kostengünstig verbinden lassen. Insbesondere liegt der Erfindung die Aufgabe zugrunde, ein solches Hybrid-Bauteil zur Verfügung zu stellen, das sich durch eine zuverlässige Verbindung von metallischer und polymerer Komponente sowie günstige Herstellungskosten auszeichnet.

Gelöst wird diese Aufgabe durch ein Verfahren mit den in Anspruch 1 angegebenen Merkmalen bzw. durch ein Hybrid-Bauteil mit den in Anspruch 13 angegebenen Merkmalen. Bevorzugte und vorteilhafte Ausgestaltungen des erfindungsgemäßen Verfahrens und des erfindungsgemäßen Hybrid-Bauteils sind in den auf Anspruch 1 bzw. Anspruch 13 rückbezogenen Ansprüchen angegeben.

Die Erfindung sieht zur Lösung der voranstehend genannten Aufgabe vor, dass die metallische Komponente und/oder die polymere Komponente so ausgewählt oder bearbeitet werden, dass die lichte Weite des Hohlraums zur Aufnahme des Abschnitts der polymeren Komponente vor dem stoffschlüssigen Aneinanderfügen kleiner als das Außenmaß des Querschnitts des in den Hohlraum anzuordnenden Abschnitts der polymeren Komponente ist, dass die metallische Komponente derart erwärmt wird, dass die lichte Weite des Hohlraums zunimmt und dann größer als oder gleich dem Außenmaß des Querschnitts des in den Hohlraum anzuordnenden Abschnitts der polymeren Komponente ist, dass der besagte Abschnitt der polymeren Komponente in dem aufgrund der Erwärmung geweiteten Hohlraum angeordnet wird, und dass der Stoffschluss zwischen der metallischen Komponente und der polymeren Komponente durch zumindest oberflächliches Schmelzen des besagten Abschnitts der polymeren Komponente aufgrund der Wärme der erwärmten metallischen Komponente, durch Schrumpfen des geweiteten Hohlraums infolge einer Abkühlung der erwärmten metallischen Komponente und durch einen durch das Schrumpfen verursachten Kontakt und/oder Druck zwischen der metallischen Komponente und der polymeren Komponente erfolgt.

Das erfindungsgemäße Verfahren erfordert keinen Klebstoff, um eine zuverlässige Verbindung zwischen der metallischen und polymeren Komponente zu realisieren. Die mit dem Klebstoff bzw. Kleben verbundenen Probleme lassen sich durch die Erfindung vermeiden. Bei dem erfindungsgemäßen Verfahren erfolgt die Verbindung der metallischen Komponente mit der polymeren Komponente vorzugsweise ohne zusätzlichen Klebstoff. Der Erfindung liegt die Erkenntnis zugrunde, dass ein oberflächennaher Teilbereich der polymeren Komponente als Klebschicht verwendet werden kann. Dies gilt nicht nur dann, wenn die polymere Komponente aus thermoplastischem Kunststoff hergestellt ist, sondern auch dann, wenn die polymere Komponente aus duroplastischem Kunststoff hergestellt ist und dieser bei Beginn des Wärmeeintrags durch die erwärmte metallische Komponente noch nicht vollständig vernetzt bzw. noch nicht auspolymerisiert ist. Allerdings ist die mindestens eine in dem erfindungsgemäßen Verfahren verwendete polymere Komponente vorzugsweise aus thermoplastischem Kunststoff, besonders bevorzugt aus thermoplastischem Faserverbundkunststoff, beispielsweise aus glasfaser- und/oder kohlenstofffaserverstärktem Polyamid, Polypropylen oder Polyethylen hergestellt. Alternativ oder ergänzend zu Glasfasern und/oder Kohlenstofffasern können in der polymeren Komponente auch andere Verstärkungsfasern enthalten sein.

Die mindestens eine metallische Komponente des erfindungsgemäßen Hybrid-Bauteils, die in Form eines Rohres oder C-Profils ausgebildet ist, ist vorzugsweise aus einer Fe-Basis-Legierung, Al-Basis-Legierung, Mg-Basis-Legierung oder Ti-Basis-Legierung hergestellt, wobei hinsichtlich der angestrebten Minimierung des Gewichts des Hybrid-Bauteils die Verwendung einer der genannten Leichtmetall-Basis-Legierungen besonders bevorzugt ist.

Die mindestens eine polymere Komponente des erfindungsgemäßen Hybrid-Bauteils ist vorzugsweise ebenfalls in Form eines Rohres oder C-Profils ausgebildet.

Das erfindungsgemäße Verfahren ermöglicht im Vergleich zu herkömmlichen Klebeverfahren eine zeit- und kosteneffizientere Fertigung von Halbzeugen für den Leichtbau, die aus einer oder mehreren metallischen Komponenten und aus einer oder mehreren polymeren Komponenten zusammengesetzt werden bzw. sind. Denn beim Kleben muss die Fügestelle für eine bestimmte Zeit unter Druck stehen, da andernfalls das Klebeergebnis schlecht oder unbefriedigend ist. Bei dem erfindungsgemäßen Verfahren wird dagegen der notwendige Druck durch den Schrumpf der metallischen Komponente, auch ohne äußere mechanische Einwirkung, ausgeübt.

Die Erfindung bietet insbesondere den Vorteil, dass die mindestens eine oder mehreren metallischen Komponenten des erfindungsgemäßen Hybrid-Bauteils (Halbzeugs) kosteneffizient mittels konventioneller Fügeverfahren, z.B. durch Schweißen, mit einer bzw. den metallischen Komponenten einer Baugruppe verbunden werden können. Dementsprechend sieht eine bevorzugte Ausgestaltung des erfindungsgemäßen Verfahrens vor, dass an die metallische Komponente oder an mindestens eine der metallischen Komponenten mindestens eine weitere metallische Komponente, insbesondere ein metallisches Kraftfahrzeug-Bauteil durch Schweißen und/oder Löten angebunden wird.

Eine weitere vorteilhafte Ausgestaltung des erfindungsgemäßen Verfahrens ist dadurch gekennzeichnet, dass die verwendete polymere Komponente mindestens zwei Enden aufweist, wobei an jedes der Enden eine metallische Komponente in der oben definierten erfindungsgemäßen Weise stoffschlüssig angefügt wird. Auf diese Weise lassen sich zahlreiche gewichtsreduzierte Halbzeuge oder Bauteile herstellen, die an mindestens zwei anderen metallischen Komponenten einer Baugruppe mittels konventioneller stoffschlüssiger Fügeverfahren, z.B. durch Schweißen, angebunden werden. Beispielsweise kann auf diese Weise eine gewichtsreduzierte Verbundlenkerachse hergestellt werden, wobei das erfindungsgemäße Hybrid-Bauteil als Querträger die Längsträger der Verbundlenkerachse verbindet. Weitere Anwendungsbeispiele für ein erfindungsgemäßes Hybrid-Bauteil sind gewichtsreduzierte Karosserie-Strukturbauteile, Chassis-Bauteile, Radaufhängungsbauteile, wie z.B. Querlenker, insbesondere Federlenker, Überrollbügel, Seitenaufprallträger, Sitzgestell-Bauteile, Kofferraum-Abdeckrollo-Kästen, Bauteile für Luft- oder Raumfahrzeuge, etc.

Nach einer weiteren Ausgestaltung des erfindungsgemäßen Verfahrens werden der Hohlraum zur Aufnahme des Abschnitts der polymeren Komponente und/oder der in dem Hohlraum anzuordnende Abschnitt der polymeren Komponente vor dem stoffschlüssigen Aneinanderfügen einer Oberflächenbehandlung unterzogen, um die Maßgenauigkeit des Hohlraums und/oder die Maßgenauigkeit des in dem Hohlraum anzuordnenden Abschnitts der polymeren Komponente und/oder die Verbindungsqualität zwischen der metallischen Komponente und der polymeren Komponente zu erhöhen.

Die Oberflächenbehandlung kann aus einem Schleifen der Oberfläche des Hohlraums und/oder einem Schleifen der Oberfläche des in dem Hohlraum der metallischen Komponente anzuordnenden Abschnitts der polymeren Komponente bestehen und/oder ein solches Schleifen umfassen. Durch das Schleifen lässt sich eine gewünschte Durchmessergenauigkeit erzielen bzw. sicherstellen.

Alternativ oder ergänzend kann die Oberflächenbehandlung auch aus einem Aufrauen oder dreidimensionalen Strukturieren der Oberfläche des der Aufnahme des Abschnitts der polymeren Komponente dienenden Hohlraums der metallischen Komponente bestehen oder ein solches Aufrauen oder Strukturieren umfassen. Eine auf diese Weise erzeugte dreidimensionale Oberflächenstruktur kann beispielsweise in Form einer geriffelten, gezahnten oder gerändelten Oberflächenstruktur ausgeführt sein. Durch eine solche Oberflächenstruktur wird die Verbindungsqualität zwischen der metallischen Komponente und der polymeren Komponente optimiert. Das Aufrauen bzw. dreidimensionale Strukturieren der Oberfläche erfolgt in weiterer Ausgestaltung der Erfindung vorzugsweise mittels eines Lasers.

Des Weiteren kann die Oberflächenbehandlung nach einer weiteren Ausgestaltung des erfindungsgemäßen Verfahrens auch aus einem Kalibrieren des der Aufnahme des Abschnitts der polymeren Komponente dienenden Hohlraums bestehen oder ein solches Kalibrieren umfassen. Diese Ausgestaltung vereinfacht insbesondere das Einsetzen der polymeren Komponente in den Hohlraum der metallischen Komponente.

Die Erwärmung der polymeren Komponente, die z.B. aus einem thermoplastischen Faserverbundkunststoffrohr besteht oder gefertigt ist, erfolgt durch die zuvor erhitzte metallische Komponente, die rohrförmig oder als C-Profil ausgebildet ist. Die metallische Komponente kann hierzu auf verschiedene Weise erwärmt (erhitzt) werden, beispielsweise mittels eines Ofens, vorzugsweise Durchlaufofens, der mit Heizstrahlern und/oder Brennern ausgerüstet ist. Eine bevorzugte Ausgestaltung des erfindungsgemäßen Verfahrens sieht allerdings vor, dass das Erwärmen der metallischen Komponente durch induktives Erwärmen erfolgt. Hierdurch lässt sich der Fügebereich der metallischen Komponente, d.h. ihr Hohlraum zur Aufnahme der polymeren Komponente, schnell und weitgehend selektiv und damit sehr effektiv erhitzen.

Die Abkühlung des durch die Erwärmung geweiteten Hohlraums kann in einer einfachen Ausgestaltung des erfindungsgemäßen Verfahrens durch Abkühlung an Umgebungsluft oder durch Abkühlung in einer gekühlten Umgebung erfolgen. Nach einer weiteren Ausgestaltung des erfindungsgemäßen Verfahrens erfolgt die Abkühlung der erwärmten metallischen Komponente jedoch vorzugsweise durch beschleunigtes Abkühlen, beispielsweise indem die metallische Komponente mit einem Kühlfluid beaufschlagt wird und/oder indem an eine Innenfläche des in dem Hohlraum der metallischen Komponente angeordneten Abschnitts der polymeren Komponente und/oder an die Außenfläche der metallischen Komponente ein gekühltes Werkzeug angelegt wird. Durch die beschleunigte Abkühlung der erwärmten Fügestelle der metallischen Komponente lässt sich die Produktivität des erfindungsgemäßen Verfahrens steigern. Als Kühlfluid können dabei zum Beispiel ein strömendes Gas, insbesondere strömende Luft oder Inertgas, Wasser oder ein Wasser-Luft-Gemisch verwendet werden.

Eine weitere Ausgestaltung des erfindungsgemäßen Verfahrens sieht vor, dass dann, wenn die polymere Komponente rohrförmig oder als U-Profil oder C-Profil ausgeführt ist, das stoffschlüssige Aneinanderfügen von metallischer Komponente und polymerer Komponente durch Anlegen eines Werkzeuges an der Innenfläche der polymeren Komponente stabilisiert wird. Durch diese Ausgestaltung kann die Verbindungsqualität weiter verbessert werden. Zur Stabilisierung der Fügestelle kann an der Innenfläche der polymeren Komponente insbesondere ein gekühltes Werkzeug angelegt werden.

Der in dem Hohlraum der metallischen Komponente anzuordnende Abschnitt der polymeren Komponente wird vorzugsweise so bemessen, dass ein gegenüber diesem Abschnitt längerer Abschnitt der polymeren Komponente außerhalb der metallischen Komponente verbleibt.

Nachfolgend wird die Erfindung anhand einer Ausführungsbeispiele darstellenden Zeichnung näher erläutert. Es zeigen schematisch:
- Fig. 1a) bis d): verschiedene Phasen in der Herstellung eines Hybrid-Bauteils, das aus mindestens einer polymeren Komponente und mindestens einer metallischen Komponente zusammengesetzt ist, wobei hier als polymere Komponente z.B. ein thermoplastisches Faserverbundrohr und als metallische Komponente z.B. ein Metallrohr verwendet werden, und wobei die Komponenten in einem Längsschnitt dargestellt sind; und
- Fig. 2: eine Verbundlenkerachse mit einem erfindungsgemäßen Hybrid-Bauteil, in einer perspektivischen Darstellung.

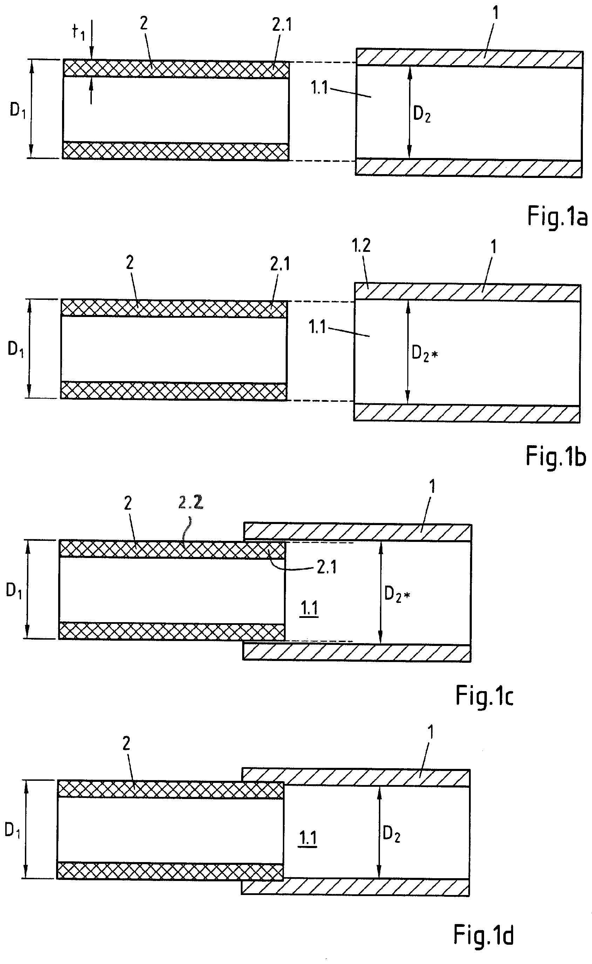

Das erfindungsgemäße Verfahren zur Herstellung eines aus mindestens einer metallischen Komponente 1 und mindestens einer polymeren, vorzugsweise faserverstärkten Komponente 2 zusammengesetzten Hybrid-Bauteils, bei dem die metallische Komponente 1 rohrförmig ausgebildet ist oder ein anderes geeignetes Querschnittsprofil, z.B. ein C-Profil besitzt und einen Hohlraum 1.1 zur Aufnahme eines Abschnitts 2.1 der polymeren Komponente 2 aufweist, und bei dem die metallische Komponente und die polymere Komponente unter Wärmeeinwirkung stoffschlüssig aneinandergefügt werden, lässt sich in mehrere Verfahrensschritte unterteilen. In einem ersten Verfahrensschritt werden die metallische Komponente 1 und/oder die polymere Komponente 2 so ausgewählt oder bearbeitet, dass die lichte Weite des Hohlraums 1.1 zur Aufnahme des Abschnitts 2.1 der polymeren Komponente 2 vor dem stoffschlüssigen Aneinanderfügen kleiner als das Außenmaß des Querschnitts des in den Hohlraum 1.1 anzuordnenden Abschnitts 2.1 der polymeren Komponente 2 ist. Bei dem in Fig. 1a) skizzierten Ausführungsbeispiel ist dementsprechend der äußere Durchmesser D₁ eines thermoplastischen Faserverbundkunststoffrohres 2 im Ausgangszustand größer als der Innendurchmesser D₂ eines Metallrohres 1.

Der Außendurchmesser D₁ des faserverstärkten Kunststoffrohres 2 bzw. der Innendurchmesser D₂ des Metallrohres 1 liegen beispielsweise in einem Bereich von 20 mm bis 120 mm. Das Durchmesserverhältnis wird vorzugsweise so gewählt, dass D₁ ≥ 0,7 x D₂ bzw. D₁ ≤ D_{2*} + 2 x t₁ gilt, wobei t₁ die Wanddicke (Wandstärke) des Kunststoffrohres 2 bezeichnet.

Das Metallrohr 1 ist beispielsweise aus einer Fe-Basis-Legierung, Al-Basis-Legierung, Mg-Basis-Legierung oder Ti-Basis-Legierung hergestellt, wobei die genannten Leichtmetall-Legierungen besonders bevorzugt sind.

In einem nächsten oder weiteren Schritt wird das Metallrohr 1 derart erwärmt, dass die lichte Weite seines Hohlraums 1.1 zunimmt und dann größer als das Außenmaß des Querschnitts des in den Hohlraum 1.1 anzuordnenden Abschnitts 2.1 der polymeren Komponente 2 ist. Der Innendurchmesser D₂ des Metallrohres 1 nimmt also aufgrund der thermischen Ausdehnung des Metalls auf einen Wert D_{2*} zu. Es gilt D_{2*} > D₂ und D_{2*} ist größer als D₁ (Fig. 1b)).

Die Erwärmung des Metallrohres 1 kann auf verschiedene Weise erfolgen, beispielsweise mittels eines oder mehrerer Heizstrahler und/oder Gasbrenner, wobei diese im Wesentlichen auf den Abschnitt 1.2 des Metallrohres 1, in welchem des Kunststoffrohr 2 angeordnet wird, gerichtet bzw. konzentriert werden können. Nach einer besonders bevorzugten Ausgestaltung des erfindungsgemäßen Verfahrens erfolgt die Erwärmung des Metallrohres 1 durch eine selektive induktive Erwärmung.

In einem nachfolgenden Verfahrensschritt wird der besagte bzw. ein bestimmter Abschnitt 2.1 des faserverstärkten Kunststoffrohres 2 in dem aufgrund der Erwärmung geweiteten Hohlraum 1.1 des Metallrohres 1 angeordnet (Fig. 1c)).

Der in dem Hohlraum 1.1 anzuordnende Abschnitt 2.1 des Kunststoffrohres 2 wird vorzugsweise so bemessen, dass ein gegenüber diesem Abschnitt längerer Abschnitt 2.2 des Kunststoffrohres 2 außerhalb des Metallrohres 1 verbleibt. Die axiale Länge des in dem Hohlraum 1.1 angeordneten Abschnitts 2.1 des Kunststoffrohres 2 kann beispielsweise kleiner als der Durchmesser D₁ des Kunststoffrohres 2 sowie kleiner als der Innendurchmesser D₂ des Metallrohres 1 sein.

Anschließend führt die Abkühlung des Metallrohres 1 zur Verringerung dessen Innendurchmessers. Der Innendurchmesser D_{2*} des Metallrohres 1 im erwärmten Zustand verringert sich im Fügebereich aufgrund der Abkühlung auf einen Wert, der schließlich dem Innendurchmesser D₂ des Metallrohres 1 im Ausgangszustand gemäß Fig. 1a) oder dem äußeren Durchmesser D₁ des faserverstärkten Kunststoffrohres 2 entspricht (Fig. 1d)).

Der Stoffschluss zwischen dem Metallrohr 1 und dem faserverstärkten, thermoplastischen Kunststoffrohr 2 erfolgt dabei durch oberflächliches Schmelzen des in das erwärmte Metallrohr 1 eingesetzten Abschnitts 2.1 des Kunststoffrohres 2 aufgrund der Wärme des erwärmten Metallrohres 1, durch Schrumpfen des geweiteten Hohlraums 1.1 des erwärmten Metallrohres infolge seiner Abkühlung und durch einen durch das Schrumpfen verursachten Kontakt und/oder Druck zwischen dem Metallrohr 1 und dem Kunststoffrohr 2. Die thermoplastische Matrix des Faserverbundkunststoffrohres 2 wird also durch die Wärme des Metallrohres 1 an ihrer Oberfläche geschmolzen und agiert dort somit als Klebstoff.

Die Abkühlung der Fügestelle zwischen Kunststoffrohr 2 und Metallrohr 1 kann durch Umgebungsluft erfolgen, wobei die Umgebungsluft typischerweise eine deutlich geringere Temperatur aufweist als das erwärmte Metallrohr. Vorzugsweise wird die Abkühlung der Fügestelle zwischen Kunststoffrohr 2 und dem erwärmten Metallrohr 1 jedoch beschleunigt, indem die Fügestelle beispielsweise mit strömender Kühlungsluft oder einem anderen Kühlungsgas beaufschlagt wird. Nach einer alternativen oder weiteren Ausführungsform des erfindungsgemäßen Verfahrens kann eine beschleunigte Abkühlung der Fügestelle auch durch deren Beaufschlagung mit Wasser, einem Luft-Wasser-Gemisch oder einer anderen Kühlflüssigkeit erfolgen. Ferner kann nach einer weiteren Ausführungsform des erfindungsgemäßen Verfahrens eine beschleunigte Abkühlung der Fügestelle auch durch Anlegen eines gekühlten Werkzeuges (nicht gezeigt) an die Innenfläche des faserverstärkten Kunststoffrohres 2 und/oder an die Außenfläche des metallischen Rohres 1 erfolgen.

Das erfindungsgemäße Verfahren kann darüber hinaus weitere Verfahrensschritte umfassen. Beispielsweise sieht eine bevorzugte Ausführungsform des Verfahrens vor, dass der Hohlraum 1.1 zur Aufnahme des Abschnitts 2.1 des Kunststoffrohres 2 und/oder der in dem Hohlraum 1.1 anzuordnende Abschnitt 2.1 des Kunststoffrohres vor dem stoffschlüssigen Aneinanderfügen einer Oberflächenbehandlung unterzogen werden. Die Oberflächenbehandlung kann insbesondere ein Schleifen einer der oder beider aneinander zu fügenden Oberflächen beinhalten. Des Weiteren kann es sich bei der Oberflächenbehandlung auch um ein Aufrauen bzw. das Erzeugen einer dreidimensionalen Oberflächenstruktur im Fügebereich des Metallrohres 1 handeln. Durch eine aufgeraute Oberfläche des Metallrohres 1 im Fügebereich bzw. eine Strukturelemente aufweisende Oberflächenstruktur, z.B. eine gerändelte Metallrohroberfläche, wird die Verbindungsqualität zwischen dem Metallrohr 1 und dem Kunststoffrohr 2 gesteigert. Ferner kann es sich bei der Oberflächenbehandlung auch um ein Kalibrieren des oder der Enden des Metallrohres 1 handeln.

Zur Optimierung der Verbindungsqualität zwischen dem Metallrohr 1 und dem Kunststoffrohr 2 sieht eine weitere optionale Ausgestaltung des erfindungsgemäßen Verfahrens vor, dass die Fügestelle stabilisiert wird. Hierzu wird im Bereich der jeweiligen Fügestelle an die Innenfläche des Kunststoffrohres 2 ein Werkzeug (nicht gezeigt), beispielsweise ein radial ausdehnbares und umgekehrt kontraktierbares Gegendruckwerkzeug, angelegt und aktiviert bzw. nach erfolgter Stabilisierung deaktiviert. Das Stabilisierungswerkzeug kann dabei nach einer bevorzugten Ausgestaltung des erfindungsgemäßen Verfahrens auch als gekühltes Werkzeug zur Abkühlung der Fügestelle ausgebildet sein.

Das Metallrohr 1 des erfindungsgemäßen Hybrid-Bauteils kann mit Hilfe konventioneller Fügeverfahren, z.B. durch Schweißen, mit einer oder mehreren weiteren metallischen Komponenten eines Fahrzeugteils oder einer Fahrzeug-Baugruppe verbunden werden.

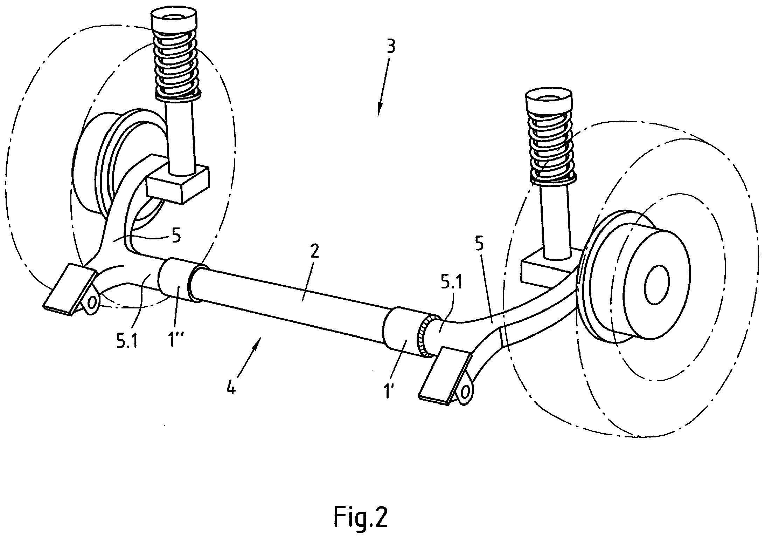

In Fig. 2 ist eine Verbundlenkerachse 3 eines Kraftfahrzeugs skizziert, die ein erfindungsgemäßes Hybrid-Bauteil 4 als Querträger aufweist. Das in der Verbundlenkerachse 3 integrierte Hybrid-Bauteil 4 ist aus einem faserverstärktem, thermoplastischem Kunststoffrohr 2 und metallischen rohrförmigen Komponenten 1', 1" gebildet, wobei letztere mit den Enden des Kunststoffrohres 2 ohne Verwendung von zusätzlichem Klebstoff stoffschlüssig verbunden sind. Der Stoffschluss zwischen dem faserverstärkten, thermoplastischen Kunststoffrohr 2 und den metallischen Komponenten 1', 1" ist durch die oben mit Bezug auf die Figuren 1a) bis 1d) beschriebenen Verfahrensschritte realisiert. Die metallischen Komponenten 1', 1" sind an ihren dem Kunststoffrohr 2 abgewandten Enden mit metallischen Ansätzen oder Armen 5.1 von Längsträgern 5 der Verbundlenkerachse 3 verbunden, vorzugsweise verschweißt.

Die Ausführung der vorliegenden Erfindung ist nicht auf die in der Zeichnung dargestellten Ausführungsbeispiele beschränkt. So ist beispielsweise die Anwendung der Erfindung nicht auf die stoffschlüssige Verbindung von Kunststoffrohren 2 und Metallrohren 1 beschränkt. Vielmehr lässt sich die Erfindung auch bei thermoplastischen Kunststoffprofilen und Metallprofilen anwenden, die ein geschlitztes Rohrprofil oder ein C-Profil aufweisen. Ferner lässt sich die Erfindung nicht nur bei Verbundlenkerachsen, sondern auch bei anderen Fahrzeug-Baugruppen, insbesondere bei Fahrzeug-Baugruppen von Luft- und Raumfahrtfahrzeugen vorteilhaft nutzen.

## Patentansprüche

1. Verfahren zur Herstellung eines aus mindestens einer metallischen Komponente (1; 1', 1") und mindestens einer polymeren, vorzugsweise faserverstärkten Komponente (2) zusammengesetzten Hybrid-Bauteils (4), bei dem die metallische Komponente (1; 1', 1") und die polymere Komponente (2) unter Wärmeeinwirkung stoffschlüssig aneinandergefügt werden, **dadurch gekennzeichnet, dass** die metallische Komponente (1; 1', 1") rohrförmig oder als C-Profil ausgebildet ist und einen Hohlraum (1.1) zur Aufnahme eines Abschnitts (2.1) der polymeren Komponente (2) aufweist, und die metallische Komponente (1; 1', 1") und/oder die polymere Komponente (2) so ausgewählt oder bearbeitet werden, dass die lichte Weite des Hohlraums (1.1) zur Aufnahme des Abschnitts (2.1) der polymeren Komponente (2) vor dem stoffschlüssigen Aneinanderfügen kleiner als das Außenmaß des Querschnitts des in den Hohlraum (1.1) anzuordnenden Abschnitts (2.1) der polymeren Komponente (2) ist, dass die metallische Komponente (1; 1', 1") derart erwärmt wird, dass die lichte Weite des Hohlraums (1.1) zunimmt und dann größer als oder gleich dem Außenmaß des Querschnitts des in den Hohlraum (1.1) anzuordnenden Abschnitts (2.1) der polymeren Komponente (2) ist, dass der besagte Abschnitt (2.1) der polymeren Komponente (2) in dem aufgrund der Erwärmung geweiteten Hohlraum (1.1) angeordnet wird, und dass der Stoffschluss zwischen der metallischen Komponente (1; 1', 1") und der polymeren Komponente (2) durch zumindest oberflächliches Schmelzen des besagten Abschnitts (2.1) der polymeren Komponente (2) aufgrund der Wärme der erwärmten metallischen Komponente (1; 1', 1"), durch Schrumpfen des geweiteten Hohlraums (1.1) infolge einer Abkühlung der erwärmten metallischen Komponente (1; 1', 1") und durch einen durch das Schrumpfen verursachten Kontakt und/oder Druck zwischen der metallischen Komponente (1; 1', 1") und der polymeren Komponente (2) erfolgt.

2. Verfahren nach Anspruch 1, **dadurch gekennzeichnet, dass** an die metallische Komponente oder an mindestens eine der metallischen Komponenten (1; 1', 1") mindestens eine weitere metallische Komponente (5.1), insbesondere ein metallisches Kraftfahrzeug-Bauteil durch Schweißen und/oder Löten angebunden wird.

3. Verfahren nach Anspruch 1 oder 2, **dadurch gekennzeichnet, dass** die verwendete polymere Komponente (2) mindestens zwei Enden aufweist, wobei an jedes der Enden eine metallische Komponente (1', 1") in der in Anspruch 1 definierten Weise stoffschlüssig angefügt wird.

4. Verfahren nach einem der Ansprüche 1 bis 3, **dadurch gekennzeichnet, dass** der Hohlraum (1.1) zur Aufnahme des Abschnitts (2.1) der polymeren Komponente (2) und/oder der in dem Hohlraum (1.1) anzuordnende Abschnitt (2.1) der polymeren Komponente (2) vor dem stoffschlüssigen Aneinanderfügen einer Oberflächenbehandlung unterzogen werden, um die Maßgenauigkeit des Hohlraums (1.1) und/oder die Maßgenauigkeit des in dem Hohlraum (1.1) anzuordnenden Abschnitts (2.1) der polymeren Komponente (2) und/oder die Verbindungsqualität zwischen der metallischen Komponente (1; 1', 1") und der polymeren Komponente (2) zu erhöhen.

5. Verfahren nach Anspruch 4, **dadurch gekennzeichnet, dass** die Oberflächenbehandlung aus einem Schleifen der Oberfläche des Hohlraums (1.1) der metallischen Komponente (1; 1', 1") und/oder einem Schleifen der Oberfläche des in dem Hohlraum (1.1) anzuordnenden Abschnitts (2.1) der polymeren Komponente (2) besteht und/oder ein solches Schleifen umfasst.

6. Verfahren nach Anspruch 4 oder 5, **dadurch gekennzeichnet, dass** die Oberflächenbehandlung aus einem Aufrauen oder dreidimensionalen Strukturieren der Oberfläche des Hohlraums (1.1) der metallischen Komponente (1; 1', 1") besteht oder ein solches Aufrauen oder Strukturieren umfasst.

7. Verfahren nach einem der Ansprüche 4 bis 6, **dadurch gekennzeichnet, dass** die Oberflächenbehandlung aus einem Kalibrieren des Hohlraums (1.1) der metallischen Komponente (1; 1', 1") besteht oder ein solches Kalibrieren umfasst.

8. Verfahren nach einem der Ansprüche 1 bis 7, **dadurch gekennzeichnet, dass** das Erwärmen der metallischen Komponente (1; 1', 1") durch induktives Erwärmen erfolgt.

9. Verfahren nach einem der Ansprüche 1 bis 8, **dadurch gekennzeichnet, dass** die Abkühlung der erwärmten metallischen Komponente (1; 1', 1") durch beschleunigtes Abkühlen erfolgt, indem die metallische Komponente (1; 1', 1") mit einem Kühlfluid beaufschlagt wird.

10. Verfahren nach einem der Ansprüche 1 bis 9, **dadurch gekennzeichnet, dass** die Abkühlung der erwärmten metallischen Komponente (1; 1', 1") durch beschleunigtes Abkühlen erfolgt, indem an eine Innenfläche des in dem Hohlraum (1.1) der metallischen Komponente (1; 1', 1") angeordneten Abschnitts (2.1) der polymeren Komponente (2) und/oder an die Außenfläche der metallischen Komponente (1; 1', 1") ein gekühltes Werkzeug angelegt wird.

11. Verfahren nach einem der Ansprüche 1 bis 10, **dadurch gekennzeichnet, dass** wenn die polymere Komponente (2) rohrförmig oder als U-Profil oder C-Profil ausgeführt ist, das stoffschlüssige Aneinanderfügen von metallischer Komponente (1; 1', 1") und polymerer Komponente (2) durch Anlegen eines Werkzeuges an der Innenfläche der polymeren Komponente (2) stabilisiert wird.

12. Verfahren nach einem der Ansprüche 1 bis 11, **dadurch gekennzeichnet, dass** der in dem Hohlraum (1.1) der metallischen Komponente (1;1', 1") anzuordnende Abschnitt (2.1) der polymeren Komponente (2) so bemessen wird, dass ein gegenüber dem Abschnitt (2.1) längerer Abschnitt (2.2) der polymeren Komponente (2) außerhalb der metallischen Komponente (1, 1', 1") verbleibt.

13. Hybrid-Bauteil (4) zusammengesetzt aus mindestens einer metallischen Komponente (1; 1', 1") und mindestens einer polymeren Komponente (2), **dadurch gekennzeichnet, dass** das Hybrid-Bauteil durch das Verfahren nach einem der Ansprüche 1 bis 12 hergestellt ist.

14. Hybrid-Bauteil (4) nach Anspruch 13, **dadurch gekennzeichnet, dass** an die metallische Komponente (1) oder an mindestens eine der metallischen Komponenten (1', 1") mindestens eine weitere metallische Komponente (5.1), insbesondere ein metallisches Kraftfahrzeug-Bauteil (5) durch Schweißen und/oder Löten angebunden ist.

15. Hybrid-Bauteil (4) nach Anspruch 13 oder 14, **dadurch gekennzeichnet, dass** die polymere Komponente (2) mindestens zwei Enden aufweist, wobei an jedes der Enden eine metallische Komponente (1', 1") in der in Anspruch 1 definierten Weise stoffschlüssig angefügt ist.

## Claims

1. Method for producing a hybrid component part (4) assembled from at least one metal component (1; 1', 1") and at least one polymeric, preferably fibre-reinforced component (2), wherein the metal component (1; 1', 1") and the polymeric component (2) are integrally joined under the influence of heat, **characterised in that** the metal component (1; 1', 1") is tubular or is formed as a C-profile, and comprises a cavity (1.1) for receiving a portion (2.1) of the polymeric component (2), and the metal component (1; 1', 1") and/or the polymeric component (2) are selected or machined such that the inner width of the cavity (1.1) for receiving the portion (2.1) of the polymeric component (2) before the integral joining process is smaller than the external dimensions of the cross section of the portion (2.1) of the polymeric component (2) to be arranged in the cavity (1.1), **in that** the metal component (1; 1', 1") is heated such that the inner width of the cavity (1.1) increases and is then larger than or equal to the external dimensions of the cross section of the portion (2.1) of the polymeric component (2) to be arranged in the cavity (1.1), **in that** said portion (2.1) of the polymeric component (2) is arranged in the cavity (1.1) widened by the heating process, and **in that** the integral connection between the metal component (1; 1', 1") and the polymeric component (2) is achieved by melting of at least the surface of said portion (2.1) of the polymeric component (2) on account of the heat of the heated metal component (1; 1', 1"), by shrinking of the widened cavity (1.1) as a result of cooling of the heated metal component (1; 1', 1"), and by contact and/or pressure between the metal component (1; 1', 1") and the polymeric component (2) caused by the shrinking.

2. Method according to claim 1, **characterised in that** at least one further metal component (5.1), in particular a metal motor vehicle component part, is fastened to the metal component or to at least one of the metal components (1; 1', 1") by means of welding and/or soldering.

3. Method according to either claim 1 or claim 2, **characterised in that** the polymer component (2) used comprises at least two ends, a metal component (1', 1") being integrally joined to each of the ends in the manner specified in claim 1.

4. Method according to any of claims 1 to 3, **characterised in that** the cavity (1.1) for receiving the portion (2.1) of the polymeric component (2) and/or the portion (2.1) of the polymeric component (2) to be arranged in the cavity (1.1) are subjected to a surface treatment before being integrally joined, in order to increase the dimensional accuracy of the cavity (1.1) and/or the dimensional accuracy of the portion (2.1) of the polymeric component (2) to be arranged in the cavity (1.1) and/or the quality of the connection between the metal component (1; 1', 1") and the polymeric component (2).

5. Method according to claim 4, **characterised in that** the surface treatment consists in grinding the surface of the cavity (1.1) of the metal component (1; 1', 1") and/or grinding the surface of the portion (2.1) of the polymeric component (2) to be arranged in the cavity (1.1), and/or comprises grinding of this kind.

6. Method according to either claim 4 or claim 5, **characterised in that** the surface treatment consists in roughening or three-dimensionally structuring the surface of the cavity (1.1) of the metal component (1; 1', 1"), or comprises roughening or structuring of this kind.

7. Method according to any of claims 4 to 6, **characterised in that** the surface treatment consists in calibrating the cavity (1.1) of the metal component (1; 1', 1"), or comprises calibration of this kind.

8. Method according to any of claims 1 to 7, **characterised in that** the metal component (1; 1', 1") is heated by means of inductive heating.

9. Method according to any of claims 1 to 8, **characterised in that** the heated metal component (1; 1', 1") is cooled by means of accelerated cooling, **in that** a cooling fluid is applied to the metal component (1; 1', 1").

10. Method according to any of claims 1 to 9, **characterised in that** the heated metal component (1; 1', 1") is cooled by means of accelerated cooling, **in that** a cooled tool is placed on an inner surface of the portion (2.1) of the polymeric component (2) arranged in the cavity (1.1) of the metal component (1; 1', 1") and/or on the outer surface of the metal component (1; 1', 1").

11. Method according to any of claims 1 to 10, **characterised in that**, if the polymeric component (2) is tubular or is formed as a U-profile or C-profile, the integral joining of the metal component (1; 1', 1") to the polymeric component (2) is stabilised by placing a tool on the inner surface of the polymeric component (2).

12. Method according to any of claims 1 to 11, **characterised in that** the portion (2.1) of the polymeric component (2) to be arranged in the cavity (1.1) of the metal component (1; 1', 1") is dimensioned such that a portion (2.2) of the polymeric component (2) that is longer than the portion (2.1) remains outside the metal component (1, 1', 1").

13. Hybrid component part (4) assembled from at least one metal component (1; 1', 1") and at least one polymeric component (2), **characterised in that** the hybrid component part is produced by means of the method according to any of claims 1 to 12.

14. Hybrid component part (4) according to claim 13, **characterised in that** at least one further metal component (5.1), in particular a metal motor vehicle component part (5), is fastened to the metal component (1) or to at least one of the metal components (1', 1") by means of welding and/or soldering.

15. Hybrid component part (4) according to either claim 13 or claim 14, **characterised in that** the polymeric component (2) comprises at least two ends, a metal component (1', 1") being integrally joined to each of the ends in the manner specified in claim 1.

## Revendications

1. Procédé de fabrication d'un composant hybride (4) constitué d'au moins un composant métallique (1; 1', 1") et d'au moins un composant polymère (2), de préférence renforcé par des fibres, procédé au cours duquel le composant métallique (1; 1', 1") et le composant polymère (2) sont joints l'un à l'autre par continuité de matière, sous l'effet de la chaleur, **caractérisé en ce que** le composant métallique (1; 1', 1") est configuré en ayant une forme tubulaire, ou bien configuré comme un profilé en C, et présente un espace creux (1.1) servant au logement d'une partie (2.1) du composant polymère (2), et le composant métallique (1; 1', 1") et/ou le composant polymère (2) sont sélectionnés ou usinés de manière telle, que la largeur intérieure de l'espace creux (1.1) servant au logement de la partie (2.1) du composant polymère (2) soit, avant la jonction de l'un à l'autre par continuité de matière, plus petite que la dimension extérieure de la section de la partie (2.1) du composant polymère (2), ladite partie devant être disposée dans l'espace creux (1.1), **en ce que** le composant métallique (1; 1', 1") est chauffé de manière telle, que la largeur intérieure de l'espace creux (1.1) augmente et qu'elle soit ensuite plus grande ou égale à la dimension extérieure de la section de la partie (2.1) du composant polymère (2), ladite partie devant être disposée dans l'espace creux (1.1), **en ce que** ladite partie (2.1) du composant polymère (2) est disposée dans l'espace creux (1.1) élargi en raison du chauffage, et **en ce que** l'assemblage par continuité de matière réalisé entre le composant métallique (1; 1', 1") et le composant polymère (2) se produit par au moins une fusion superficielle de ladite partie (2.1) du composant polymère (2), ladite fusion étant causée par la chaleur du composant métallique chauffé (1; 1', 1"), ledit assemblage par continuité de matière se produisant par retrait de l'espace creux élargi (1.1) suite à un refroidissement du composant métallique chauffé (1; 1', 1") et se produisant par un contact provoqué par le retrait et/ou sous l'effet d'une pression s'exerçant entre le composant métallique (1; 1', 1") et le composant polymère (2).

2. Procédé selon la revendication 1, **caractérisé en ce qu'**au moins un autre composant métallique (5.1), en particulier un composant métallique du véhicule automobile, est rattaché, par soudage et/ou par brasage, au composant métallique ou à au moins l'un des composants métalliques (1; 1', 1").

3. Procédé selon la revendication 1 ou 2, **caractérisé en ce que** le composant polymère utilisé (2) présente au moins deux extrémités où, au niveau de chacune des extrémités, un composant métallique (1', 1") est joint par continuité de matière, suivant la manière définie dans la revendication 1.

4. Procédé selon l'une quelconque des revendications 1 à 3, **caractérisé en ce que** l'espace creux (1.1) servant au logement de la partie (2.1) du composant polymère (2) et/ou la partie (2.1) du composant polymère (2), ladite partie devant être disposée dans l'espace creux (1.1), est soumis(e), avant la jonction de l'un à l'autre par continuité de matière, à un traitement de surface, pour augmenter la précision dimensionnelle de l'espace creux (1.1) et/ou la précision dimensionnelle de la partie (2.1) du composant polymère (2), ladite partie devant être disposée dans l'espace creux (1.1), et/ou pour augmenter la qualité de l'assemblage formé entre le composant métallique (1; 1', 1") et le composant polymère (2).

5. Procédé selon la revendication 4, **caractérisé en ce que** le traitement de surface se compose d'un meulage de la surface de l'espace creux (1.1) du composant métallique (1; 1', 1") et/ou se compose d'un meulage de la surface de la partie (2.1) du composant polymère (2), ladite partie devant être disposée dans l'espace creux (1.1), et/ou ledit traitement de surface comprend un tel meulage.

6. Procédé selon la revendication 4 ou 5, **caractérisé en ce que** le traitement de surface se compose d'un dépolissage rendant la surface rugueuse ou se compose d'une structuration tridimensionnelle de la surface de l'espace creux (1.1) du composant métallique (1; 1', 1"), ou bien ledit traitement de surface comprend un tel dépolissage rendant la surface rugueuse ou comprend une telle structuration.

7. Procédé selon l'une quelconque des revendications 4 à 6, **caractérisé en ce que** le traitement de surface se compose d'un calibrage de l'espace creux (1.1) du composant métallique (1; 1', 1"), ou bien ledit traitement de surface comprend un tel calibrage.

8. Procédé selon l'une quelconque des revendications 1 à 7, **caractérisé en ce que** le chauffage du composant métallique (1; 1', 1") se produit par chauffage inductif.

9. Procédé selon l'une quelconque des revendications 1 à 8, **caractérisé en ce que** le refroidissement du composant métallique chauffé (1; 1', 1") se produit par un refroidissement accéléré, tandis que le composant métallique (1; 1', 1") est sollicité par un fluide de refroidissement.

10. Procédé selon l'une quelconque des revendications 1 à 9, **caractérisé en ce que** le refroidissement du composant métallique chauffé (1; 1', 1") se produit par un refroidissement accéléré, tandis qu'un outil refroidi est appliqué sur une surface intérieure de la partie (2.1) du composant polymère (2), ladite partie étant disposée dans l'espace creux (1.1) du composant métallique (1; 1', 1"), et/ou ledit outil refroidi est appliqué sur la surface extérieure du composant métallique (1; 1', 1").

11. Procédé selon l'une quelconque des revendications 1 à 10, **caractérisé en ce que**, quand le composant polymère (2) est réalisé en ayant une forme tubulaire ou bien réalisé comme un profilé en U ou comme un profilé en C, l'assemblage du composant métallique (1; 1', 1") et du composant polymère (2) joints l'un à l'autre par continuité de matière est stabilisé par l'application d'un outil sur la surface intérieure du composant polymère (2).

12. Procédé selon l'une quelconque des revendications 1 à 11, **caractérisé en ce que** la partie (2.1) du composant polymère (2), ladite partie devant être disposée dans l'espace creux (1.1) du composant métallique (1; 1', 1"), est dimensionnée de manière telle, qu'une partie (2.2) du composant polymère (2), plus longue par rapport à la partie (2.1), reste à l'extérieur du composant métallique (1; 1', 1").

13. Composant hybride (4) constitué d'au moins un composant métallique (1; 1', 1") et d'au moins un composant polymère (2), **caractérisé en ce que** le composant hybride est fabriqué par le procédé selon l'une quelconque des revendications 1 à 12.

14. Composant hybride (4) selon la revendication 13, **caractérisé en ce qu'**au moins un autre composant métallique (5.1), en particulier un composant métallique (5) du véhicule automobile, est rattaché, par soudage et/ou par brasage, au composant métallique (1) ou à au moins l'un des composants métalliques (1', 1").

15. Composant hybride (4) selon la revendication 13 ou 14, **caractérisé en ce que** le composant polymère (2) présente au moins deux extrémités où, au niveau de chacune des extrémités, un composant métallique (1', 1") est joint par continuité de matière, suivant la manière définie dans la revendication 1.
